# EUROPEAN PATENT APPLICATION

(11) **EP 2 733 325 A1**
(43) Date of publication of application: **21.05.2014**
(21) Application number: 12192683.6
(22) Date of filing: 14.11.2012
(51) Int. Cl.: F02B 37/18, F02M 25/07, F02D 9/16

(54) **Throttle valve for internal combustion engines**

(71) Applicant: Caterpillar Motoren GmbH & Co. KG, 24159 Kiel (DE)
(72) Inventor: Sieh, Jan Hendrik, 22769 Hamburg (DE)
(74) Representative: Kramer - Barske - Schmidtchen

(57) **Abstract**

The present disclosure generally relates to a self-cleaning throttle valve (80) to be used in an internal combustion engine. The disclosed throttle valve (80) may comprise a valve body (100) configured to be rotatably arranged within a housing (90). The valve body (100) may comprise a circumferential wall (102) and an opening (108) therethrough. The opening (108) may be rotated into at least partially alignment or fully out of alignment with an outlet (96) of the housing (90), thereby enabling or restricting exhaust gases to pass through the outlet (96). At least one scraping element (140) may be externally attached to the circumferential wall (102) and may be configured to scrape over an inner surface of the housing (90) when the valve body (100) is rotated.

## Description

### Technical Field

The present disclosure generally refers to a throttle valve for an internal combustion engine and methods for controlling a throttle valve of an internal combustion engine. Specifically, the present disclosure relates to a self-cleaning throttle valve of an internal combustion engine.

### Background

Throttle valves may be employed as kind of "ON/OFF" valves, such that, for instance, a fluid flow through the throttle valve may be controlled. In an "ON" state, the fluid flow may pass the throttle valve, whereas in an "OFF" state, the fluid flow may be restricted from passing through the throttle valve. Furthermore, throttle valves may also infinitely adjust the amount of fluid passing through the throttle valve.

When being employed in an internal combustion engine, throttle valves may be used to control an exhaust gas flow. In some embodiments, throttle valves may be employed as wastegates, which may be configured to direct the exhaust gas flow around a turbine of a turbocharger of the internal combustion engine. In such case, the throttle valve is configured to control the amount of exhaust gas bypassing the turbine, and the amount of exhaust gas passing through the turbine, respectively.

Exhaust gas of, for example, large internal combustion engines may contain soot which may effect operation of, for instance, throttle valves disposed within an exhaust gas system of the internal combustion engine. Particularly, soot may accumulate within the throttle valve and, thus, may disturb proper operation of the throttle valve.

For example, US 4 245 953 A discloses an engine turbocharger with a cartridge wastegate valve which is self-cleaning, as normal opening and closing motion acts as dislodge deposits from port edges.

The present disclosure is directed, at least in part, to improving or overcoming one or more aspects of prior systems.

### Summary of the Disclosure

According to an aspect of the present disclosure, a throttle valve for an internal combustion engine may comprise a valve body configured to be rotatably arranged within a housing. The valve body may comprise a circumferential wall and an opening extending through the circumferential wall. The opening may be configured to be rotated into at least partially alignment with an outlet, thereby enabling exhaust gases entering an inlet to pass through the outlet of the housing, and to be rotated out of alignment with the outlet, thereby restricting the exhaust gases from passing through the outlet. At least one scraping element may be attached to the circumferential wall and may be configured to, when the valve body is rotated, scrape over an inner surface of the housing.

According to another aspect of the present disclosure, an internal combustion engine may comprise a turbine configured to be driven by exhaust gas produced by the internal combustion engine, a wastegate connection configured to direct the exhaust gas around the turbine, and a throttle valve according to the present disclosure, which may be disposed within the wastegate connection.

According to another aspect of the present disclosure, a method for removing deposits accumulated within a throttle valve of an internal combustion engine may include rotating a valve body configured to be rotatably arranged within a housing, and simultaneously scraping over an inner surface of the housing.

In some embodiments, the at least one scraping element may be attached to the inner surface of a side wall of the housing, such that the at least one scraping element may be configured to scrape over an external surface of the circumferential wall of the valve body.

Other features and aspects of this disclosure will be apparent from the following description and the accompanying drawings.

### Brief Description of the Drawings

Fig. 1 shows a schematic diagram of an internal combustion engine comprising an exemplary disclosed throttle valve;
Fig. 2 shows a cross-sectional view of an exemplary disclosed throttle valve;
Fig. 3 shows a perspective view of an exemplary disclosed valve body; and
Fig. 4 shows a cut view of the throttle valve taken along a line A - A of Fig. 2.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that providing at least one scraping element externally attached to a valve body rotatable disposed within a throttle housing of a throttle valve may scrape over an inner surface of the housing, thereby removing any deposits from, when the valve body rotates. This may ensure proper operation of the throttle valve.

The present disclosure may be further based in part on the realization that rotating the valve body disposed within the housing and provided with at least one scraping element after a predetermined period of time may further ensure proper operation of the throttle valve, prevent the valve body from getting stuck within the housing, and enhance the lifetime of the throttle valve.

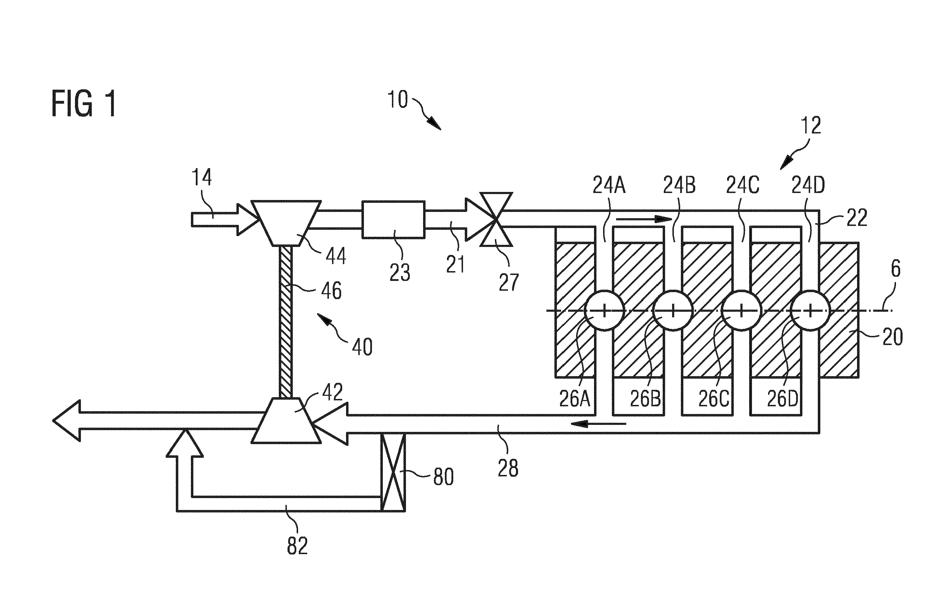

Referring now to the drawings, an internal combustion engine 10 is illustrated in Fig. 1. The internal combustion engine 10 may include features not shown, such as fuel systems, air systems, cooling systems, peripheries, drive train components, control systems etc. For the purposes of the present disclosure, the internal combustion engine 10 is an internal combustion engine running on liquid fuel, such as diesel fuel or heavy fuel oil. One skilled in the art will recognize, however, that the internal combustion engine 10 may be any type of engine (turbine, gas, natural gas, propane, dual fuel, etc.) that utilizes a mixture of fuel and air for combustion. Further, in some types of combustion engines, the mixture of fuel and air may be supplied to the combustion engine via an intake manifold. In other types of combustion engines, only air may be supplied to the combustion engine via the intake manifold, and fuel may be separately injected into each cylinder prior to combustion.

The internal combustion engine 10 may be of any size, with any number of cylinders and in any configuration ("V", "in-line", etc.). The internal combustion engine 10 may be used to power any machine or other device, including locomotive applications, on-highway trucks or vehicles, off-highway machines, earth-moving equipment, generators, aerospace applications, marine applications, pumps, stationary equipment such as power plants, or other engine-powered applications.

Still referring to Fig. 1, the internal combustion engine 10 comprises an engine block 20 including a bank of cylinders 26A to 26D, at least one fuel tank (not shown), a turbocharger 40 associated with the cylinders 26A to 26D, and an intake assembly 12.

The engine block 20 includes a crankcase (not shown) within which a crankshaft 6 indicated by a dot-dashed line is supported. The crankshaft 6 is connected to pistons (not shown) that are movable within each of the cylinders 26A to 26D during operation of the internal combustion engine 10.

The intake assembly 12 comprises an intake manifold 22 and a plurality of intake ports 24A to 24D. The intake manifold 22 defines a flow direction of charge air in the intake manifold 22 (shown by an arrow in Fig. 1) and is fluidly connected to each of the cylinders 26A to 26D via a corresponding one of the inlet ports 24A to 24D of the cylinders 26A to 26D. The inlet ports 24A to 24D are configured to receive charge air from the intake manifold 22. Generally, the inlet ports 24A to 24D may be formed at least in part in respective cylinder heads or in a common cylinder head (not shown) of the cylinders 26A to 26D.

An exhaust manifold 28 is connected to each of the cylinders 26A to 26D. Each of the cylinders 26A to 26D is provided with at least one exhaust valve (not shown) configured to open and close a fluid connection between the combustion chamber of the corresponding cylinder and the exhaust manifold 28.

The turbocharger 40 is configured to use the heat and pressure of the exhaust gas of the internal combustion engine 10 to drive a compressor 44 for compressing the charge air prior to being supplied to the cylinders 26A to 26D. Specifically, exhaust gas passing a turbine 42 of the turbocharger 40 rotates the turbine 42, thereby decreasing in pressure and temperature. The compressor 44 is rotatably connected to the turbine 42 via a common shaft 46 and driven by the turbine 42.

Charge air may be supplied to the compressor 42 via an air intake 14 fluidly connected to an air system (not shown). The compressor 42 may compress the charge air to 7 to 8 bar at 180°C and a cooler 23 may cool the charge air from about 180°C to 45°C. After combustion, the exhaust gas may have a pressure of about 5 to 6 bar at a temperature in the range from about 450°C to 500°C.

Generally, an outlet of the compressor 44 is fluidly connected to an inlet of the intake manifold 22 via a compressor connection 21. As shown in Fig. 1, an outlet of the compressor 44 is connected to the inlet of the intake manifold 22 via the cooler 23. A throttle valve 27 arranged downstream of the cooler 23 is configured to open or close the fluid connection between the compressor connection 21 and intake manifold 22, thereby enabling or restricting the flow of charge air from the compressor connection 21 into the intake manifold 22.

During operation of the internal combustion engine 10, charge air is accordingly compressed and cooled before charging of the cylinders 26A to 26D. Within the cylinders 26A to 26D, further compression and, therefore, heating of the charge air is caused through the movement of the pistons. Then, an appropriate amount of fuel, e.g. diesel oil, marine diesel oil, heavy fuel oil or a mixture thereof is injected into the cylinders 26A to26D. Therein, the fuel is combusted with the compressed charged air and produce exhaust gases, which is discharged via the exhaust manifold 28.

An outlet of the exhaust manifold 28 is fluidly connected to an inlet of the turbine 42. An outlet of the turbine 42 is fluidly connected to, for example, an exhaust gas treatment system (not shown) configured to treat the exhaust gas.

As further shown in Fig. 1, the internal combustion engine 10 may be provided with a wastegate system including a throttle valve 80 (also called wastegate valve) fluidly connected to the exhaust manifold 28, and a wastegate connection 82 bypassing the turbine 42.

By controlling the throttle valve 80, the amount of exhaust gas passing the turbine 42 is controlled, which in turn controls the compression of charge air performed by the compressor 44.

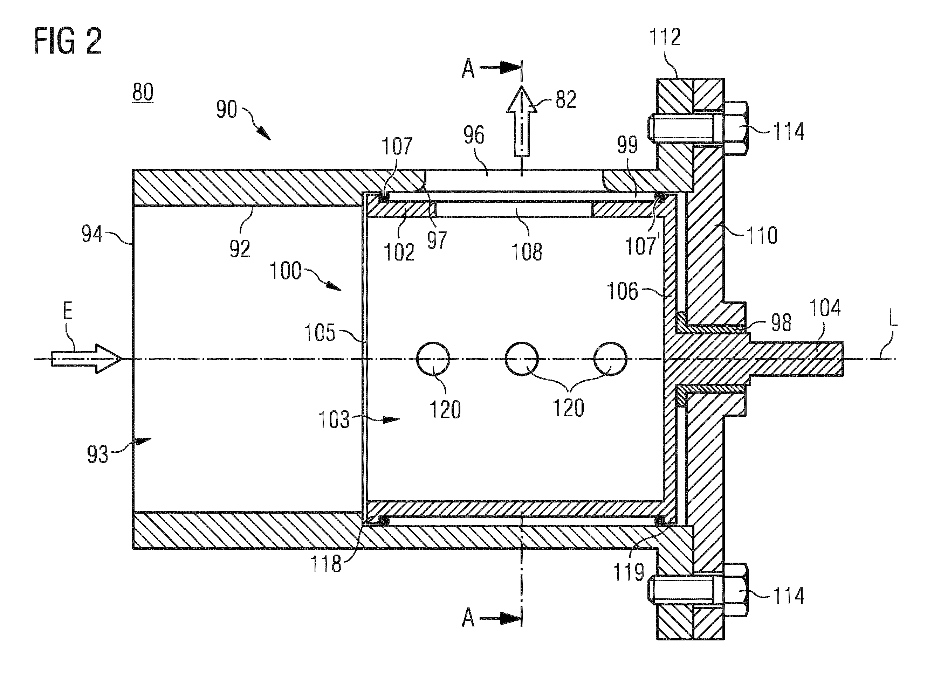

Referring now to Fig. 2, the throttle valve 80 is illustrated in greater detail. Particularly, a cut view of the throttle valve 80 is shown. The throttle valve 80 is provided in the form of a cartridge type. The throttle valve 80 comprises a housing 90 and a valve body 100 rotatably disposed within the housing 90. The housing 90 may be a valve housing for exclusively accommodating the valve body 100. In some embodiments, the housing 90 may be an exhaust gas pipe into which the valve body 100 may be inserted, or the housing 90 may be at least partially integrally formed with the valve housing.

The housing 90 includes a side wall 92 being at least partially circumferential. The side wall 92 defines a first exhaust gas passage 93 for directing exhaust gas through the housing 90. In the embodiment shown in Fig. 2, the side wall 92 comprises a circular cross-section.

The housing 90 further comprises an inlet 94 disposed at a first end of the housing 90. The inlet 94 is configured to receive exhaust gas from the exhaust manifold 28. A flow direction of the exhaust gas is indicated by an arrow E being substantially parallel to a center axis L of the housing 90.

The housing 90 further comprises an outlet 96 disposed at the side wall 92. The outlet 96 is provided in the form of an opening extending through the side wall 92. It should be understood that the outlet 96 is configured to fluidly connect the first exhaust gas passage 93 with the outside of the throttle valve 80.

The outlet 96 comprises an inner edge 97 facing the first exhaust gas passage 93. The inner edge 97 may be provided in a chamfered shape. In some embodiments, the inner edge 97 may comprises a rounded shape.

As further depicted in Fig. 2, the valve body 100 is disposed within the housing 90 and is rotatably around the center axis L of the housing 90. Specifically, the valve body 100 is arranged within a recess 99 of the housing 90.

The recess 99 of the housing 90 comprises a length being substantially equal to the length of the valve body 100, and a diameter being also substantially equal to the diameter of the valve body 100, such that the valve body 100 is closely but freely fitted in the recess. Therefore, the valve body 100 is permitted to perform a free rotational motion within the housing 90.

The valve body 100 includes a circumferential wall 102 defining a second exhaust gas passage 103 being fluidly connected to the first exhaust gas passage 93. In the embodiment shown in Fig. 2, the valve body 100 comprises a cylindrical shape.

The valve body 100 further includes a valve body inlet 105 disposed on the side facing the inlet 94 of the housing 90, such that the second exhaust gas passage 103 is fluidly connected to the first exhaust gas passage 93 via the valve body inlet 105.

The circumferential wall 102 further comprises a first flange 118 disposed at the valve body inlet 105, and a second flange 119 disposed at the transitioning portion 106. The first flange 118 comprises a circumferential shape and is configured to almost close a gap formed between the side wall 92 of the recess 99 ant the circumferential wall 92. The second flange 119 also comprises a circumferential shape and is also configured to almost close the gap at the transitioning portion 106.

On the other side opposite to the valve body inlet 105, the valve body 100 comprises a shaft 104 integrally formed with the circumferential wall 102 via a transitioning portion 106. The transitioning portion 106 is configured to close the valve body 100 on the side opposite to the valve body inlet 105. Therefore, the valve body 100 may comprises a cup-like shaped structure with an open end, namely the valve body inlet 105, and a closed end, namely the transitioning portion 106, such that the valve body 100 is a hollow body.

In some embodiments, the circumferential wall 102, the shaft 104, and the transitioning portion 106 may be separately formed and mounted to each other to form the cup-like shaped valve body 100 and, thereby forming the cartridge.

As also shown in Fig. 2, two sealing rings 107 are disposed within the gap. Specifically, one sealing ring 107 is disposed near the first flange 118, whereas the other sealing ring 107' is disposed near the second flange 119. The two sealing rings 107, 107' are configured to at least partially seal the gap, thereby restricting at least some exhaust gas of the first exhaust gas passage 93 from penetrating the gap. The sealing rings 107, 107' may be comprised of stainless steel, synthetic resin, a rubber, or any other material suitable to provide sealing properties.

The shaft 104 is supported by a bearing 98, for example, a friction bearing. The bearing 98 is disposed within a cover 110 and configured to allow rotation of the valve body 100 relative to the housing 90. In some embodiments, the bearing 98 may also be a roller bearing known in the art.

The cover 110 is sealingly mounted to the housing via a flange 112. For example, screws 114 may be used for fixing the cover 110 to the housing 90. The cover 110 is configured to support the bearing 98, such that a sealing between the first and second exhaust gas passages 93, 103 and the outside of the housing 90 is ensured.

One skilled in the art may recognize that the bearing 98 may also be disposed within the housing 90. In such embodiment, the cover 110 may, for instance, be integrally formed with the housing 90.

For rotating the valve body 100, a distal end of the shaft 104 may be actuated from the outside of the throttle valve 80 by an actuation means (not shown).

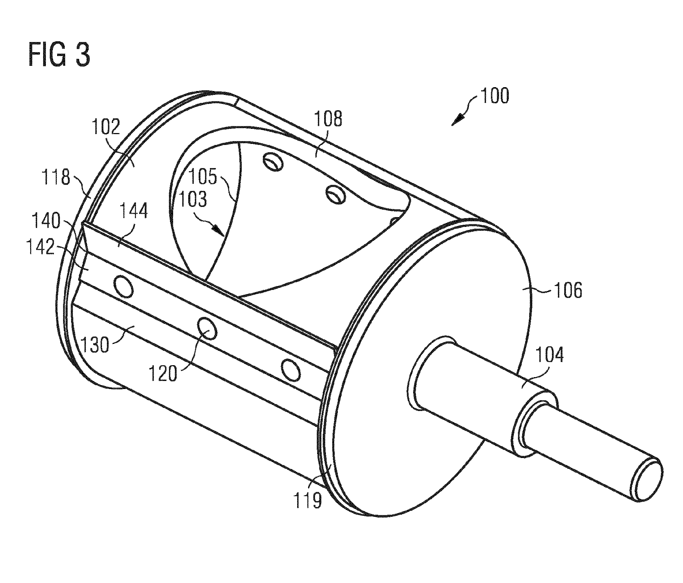

The valve body 100 further includes an opening 108 extending through the circumferential wall 102. In the embodiment shown in Figs. 2 and 3, the opening 108 comprises a circular cross-section. However, in some embodiments, the opening 108 may comprise any other cross-sectional shape suitable to direct exhaust gas, such as an oval cross-section, a rectangular cross-section, or a triangular cross-section. In yet some embodiments, the cross-sectional shape of the opening 108 may correspond to the cross-sectional shape of the outlet 96.

The opening 108 comprises a first diameter being approximately equal to a second diameter of the outlet 96. In some embodiments, as shown in Fig. 2, the first diameter of the opening 108 is smaller than the second diameter of the outlet 96.

When the valve body 100 is rotated within the housing 90, the opening 108 may be rotated into at least partially alignment with the outlet 96 of the housing 90, such that exhaust gas is permitted to pass from the second exhaust gas passage 103 through the outlet 96 of the throttle valve 80, thereby bypassing the turbine 42 of Fig. 1 through the wastegate connection 82. The operational state in which the opening 108 is at least partially aligned with the outlet 96 of the housing 90 may be also referred to as "ON state" of the throttle valve 80.

In the case the valve body 100 is rotated such that the opening 108 gets fully out of alignment with the outlet 96, the exhaust gas within the second exhaust gas passage 103 is restricted from passing through the opening 108 and, thus, through the outlet 96. In such case, regarding Fig. 1, the exhaust gas is restricted to bypass the turbine 42 and, therefore, is forced to pass through the turbine 42 and drives the same. The operational state in which the opening 108 is fully out of alignment with the outlet 96 of the housing 90 may be also referred to as "OFF state" of the throttle valve 80.

In some operations, after passing the opening 108, some exhaust gas may enter the gap between the circumferential wall 102 of the valve body 100 and the side wall 92 of the housing 90. In such case, soot may deposit on the inner surface of the side wall 92, specifically at the recess 99. In order to remove the soot accumulated at the inner surface of the side wall 92, at least one scraping element 140 (see Fig. 3) is externally attached to the circumferential wall 102. The at least one scraping element 140 is configured to contact the inner surface of the side wall 92, such that rotation of the valve body 100 causes the at least one scraping element 140 to at least partially scrape over the inner surface of the side wall 92, thereby removing any deposits accumulated thereon.

As further depicted in Figs. 2 and 3, the at least one scraping element 140 may be externally attached to the circumferential wall 102 of the valve body 100 via three rivets 120, such that the scraping element 140 is disposed within the gap between the circumferential wall 102 and the side wall 92. Particularly, the at least one scraping element 140 may be attached to the circumferential wall 102 at a portion between the first and second flanges 118 and 119.

In some embodiments, also less or more than three rivets 120 may be used to fixedly attach the at least one scraping element 140 to the circumferential wall 102. In some other embodiments, the at least one scraping element 140 may also be attached to the circumferential wall 102 via screws, a solder, a weld, or any other means suitable for attaching the at least one scraping element 140 to the circumferential wall 102.

As indicated in Fig. 2, the wastegate connection 82 may be fluidly connected to the outlet 96 of the housing 90 and may be configured to receive the exhaust gas passing through the throttle valve 80. The wastegate connection 82 is configured to re-direct the exhaust gas into the exhaust gas system downstream the turbine 42.

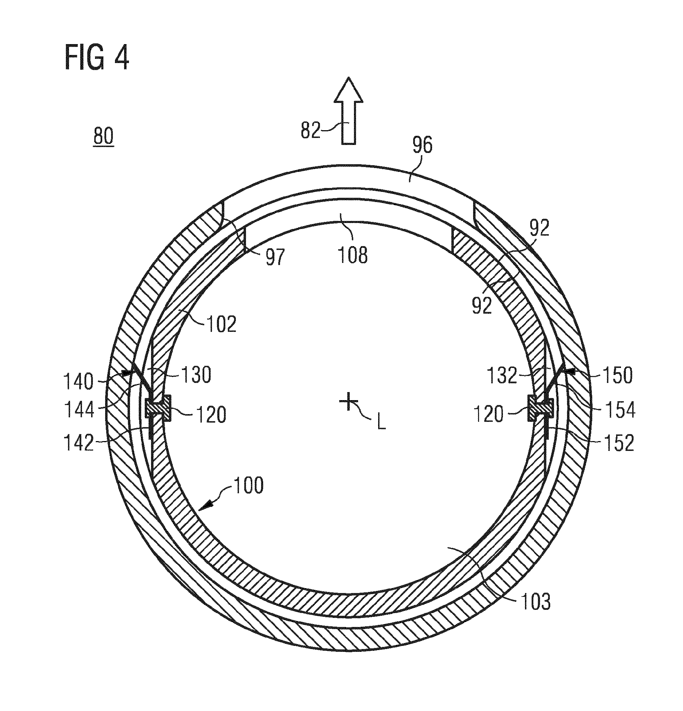

It is now referred to Fig. 3 showing a perspective view of the valve body 100, and to Fig. 4 illustrating a cross-sectional view of the throttle valve 80 taken along a line A - A of Fig. 2. Specifically, Fig. 4 illustrates the valve body 100 in the ON state, such that exhaust gas within the second exhaust gas passages 103 is permitted to pass through the outlet 96, as the opening 108 is fully aligned with the outlet 96.

As further depicted in Figs. 3 and 4, the valve body 100 comprises a first indent 130 at a first position of an external surface of the circumferential wall 102, and a second indent 132 at a second position of the external surface of the circumferential wall 102. Specifically, the first and second indents 130, 132 comprise a planar surface at the cylindrical shape of the circumferential wall 102.

The first indent 130 is configured to receive a first scraping element 140 and, therefore, to provide an attaching portion for the first scraping element 140 to the circumferential wall 102 via the rivets 120. The second indent 132 is configured to receive a second scraping element 150 and, therefore, to provide an attaching portion for the second scraping element 150 to the circumferential wall 102 via the rivets 120.

Regarding Figs. 2 to 4, it should be understood that the first and second indents 130, 132 may extend between the first flange 118 and the second flange 119. Thus, the first and second flanges 118, 119 may still comprise a circular cross-section and the sealing rings 107, 107' may still restrict exhaust gas to penetrate the gap from a side of the valve body inlet 105.

The first and second scraping elements 140, 150 may further be configured to at least partially seal the recess 99. For example, when the throttle valve is in the ON state, exhaust gas may pass the opening 108 and may penetrate into the recess 99. However, due to the continuous contact of the first and second scraping elements 140, 150 with the inner wall 92, the exhaust gas may be restricted from circumferential flowing around the entire circumferential wall 102.

The first scraping element 140 includes an attachment portion 142 and a scraping portion 144. The attachment portion 142 is configured to be mounted to the first indent 130 via the rivets 120, whereas a distal end of the scraping portion 144 is configured to contact the inner surface of the side wall 92 of the housing 90, especially the inner surface of the recess 99 of the housing 90.

The second scraping element 150 includes an attachment portion 152 and a scraping portion 154. The attachment portion 152 is configured to be mounted to the second indent 132 via the rivets 120, whereas a distal end of the scraping portion 154 is configured to contact the inner surface of the side wall 92 of the housing 90, especially the inner surface of the recess 99 of the housing 90.

In the embodiment shown, the scraping portions 144, 154 are provided at an angle with respect to the attachment portion 142, 152. This may provide at least a partially spring force such that the distal ends of the scraping portions 144, 154 are continuously contacting the inner forces of the side wall 92.

As illustrated in Fig. 4, the first and second indents 130, 132 are disposed on opposite sides with respect to the center axis L, such that the planar surface of the first indent 130 is parallel to the planar surface of the second indent 132. However, in some embodiments, the first and second indents 130, 132 and, thus, the first and second scraping element 140, 150 may also be disposed at non-opposite sides with respect to the center axis L. In such embodiments, for example, the planar surface of the first indent 130 may not be parallel to the planar surface of the second indent 132.

In some embodiments, the valve body 100 may comprise a side wall which represents only at least a part of a cylinder. In such embodiment, the cylindrical portion of the circumferential wall 102 below the first and second scraping elements 140, 150 may be omitted.

It should be further noted that there may also be only one or more than two scraping elements and, thus, only one or more than two indents provided. In such cases, the indents may be, for example, symmetrically positioned about the circumference of the circumferential wall 102.

As the scraping portion 144 of the first scraping element 140 contacts the inner surface of the side wall 92, and as the scraping portion 154 of the second scraping element 150 also contacts the inner surface of the side wall 92, the first and second scraping elements 140, 150 scrape over the side wall 92 during rotation of the valve body 100, thereby removing any deposits accumulated on the side wall 92. The removed deposits may, subsequently, be blown away by the exhaust gas passing through the throttle valve 80 when being in the ON state.

Regarding Fig. 4, it should be noted that the scraping portion 144 of the first scraping element 140 extends from the first indent 130 in a substantially clockwise direction, whereas the scraping portion 154 of the second scraping element 150 extends from the second indent 132 in a substantially counter-clockwise direction. With this arrangement, the deposits may be removed during rotation of the valve body 100 in both directions clockwise and counter-clockwise.

Specifically, when the valve body 100 is rotated in a clockwise direction relative to the housing 90, the first scraping element 140 scrapes over the inner surface of the side wall 92 and removes accumulated deposits. In the case that the valve body 100 rotates in a counter-clockwise direction relative to the housing 90, the second scraping element 140 scrapes over the inner surface of the side wall and removes accumulated deposits.

However, the person skilled in the art will recognize that, for instance, in a clockwise rotational motion of the valve body 100, also the second scraping element 150 may at least partially scrape over the inner surface of the side wall 92 and, thus, may also at least partially remove accumulated deposits. Similarly, when the valve body 100 is rotated in a counter-clockwise direction, also the first scraping element 140 may at least partially scrape over the inner surface of the side wall 92 and, thus, may also at least partially remove accumulated deposits.

For preventing the first and second scraping elements 140, 150 from being caught by the inner edge 97 of the outlet 96 during rotation of the valve body 100, the inner edge 97 is provided in the above-mentioned chamfered or rounded shape.

In some embodiments, the first and second scraping elements 140, 150 may be attached to the inner surface of the side wall 92, instead of being attached to the circumferential wall 102 of the valve body 100. Thus, first and second indents may be provided at the side wall 92, such that the circumferential wall may be provided in a cylindrical shape. In such embodiments, the first and second scraping elements may be configured to scrape over an external surface of the circumferential wall 92 of the valve body 100, thereby also dislodging any deposits accumulated thereon.

### Industrial Applicability

In the following, operation of the throttle valve 80 during operation of the internal combustion engine 10 is described with reference to Figs. 1 to 4.

After combustion of the fuel/air mixture within the cylinders 24A to 24D, the exhaust gas may be released into the exhaust manifold 28. An engine control unit (not shown) may be configured to control the rotational movement of the valve body 100 and, therefore, the amount of exhaust gas passing through or bypassing the turbine 42.

For controlling the intake manifold pressure, the turbine 42 driven by the exhaust gas may be relieved by directing exhaust gas around the turbine 42. For relieving the turbine 42, the engine control unit (not shown) rotates the valve body 100, such that the opening 108 gets into at least partially alignment with the outlet 96, thereby enabling at least some amount of exhaust gas to flow through the throttle valve 80 and, thus, to bypass the turbine 42.

In the case of operating the internal combustion engine 10 with heavy fuel oil, the exhaust gas may be strongly polluted and, thus, may contain soot, which may be critical for the operation of the throttle valve 80, as the soot may deposit on the inner surfaces. This may disturb the rotational motion of the valve body within the housing 90. In some cases, the valve body 100 may get stuck due to the high accumulation of soot within the housing 90.

During rotation of the valve body 100 within the housing 90, the first and second scraping elements 140, 150 scrape over the inner surface of the side wall 92, thereby removing any deposits accumulated thereon.

In the case that the internal combustion engine is operated in a stationary operation mode, such that the valve body 100 may not be rotated for a longer period of time, it is proposed to rotate the valve body 100 at least in one direction to clean the inner surface of the side wall 92 of the throttle valve 80. For example, after an operation time of, for example, about four hours in a stationary operation without any actuation of the valve body 100, the valve body 100 may be rotated for cleaning the throttle valve 80. Specifically, for cleaning the inner surface of the side wall 92, the valve body 100 may be at least rotated about 180° in one direction. This may ensure proper operation of the throttle valve 80 and may prevent the valve body 100 from getting stuck within the housing 90. The self-cleaning throttle valve 80 is, therefore, able to enhance its lifetime.

It should be noted that the angle of rotation for completely cleaning the inner surface 92 of the housing 90 may dependent on the number of scraping elements 140, 150. For example, in the case when only one scraping element 140 is provided, a rotation about 360° is necessary for completely removing the deposits accumulated within the recess 99.

The disclosed throttle valve 80 may be used at internal combustion engines or dual fuel internal combustion engines of middle to large size. In particular, the internal combustion engine 10 may be sized and configured to be used e.g. in vessels, larger ships, or in power plants. The disclosed throttle valve 80 may be effective in any applications where exhaust gases are produced, which contain any pollution including soot, such as heavy fuel oil applications.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Although the preferred embodiments of this invention have been described herein, improvements and modifications may be incorporated without departing from the scope of the following claims.

## Claims

1. A throttle valve (80) for an internal combustion engine (10), comprising:
a valve body (100) configured to be rotatably arranged within a housing (90), the valve body (100) comprising a circumferential wall (102) and an opening (108) extending through the circumferential wall (102), the opening (108) being configured to be rotated into at least partially alignment with an outlet (96) of the housing (90), thereby enabling exhaust gases entering an inlet (94) of the housing (90) to pass through the outlet (96), and to be rotated out of alignment with the outlet (96), thereby restricting the exhaust gases from passing through the outlet (96); and
at least one scraping element (140, 150) attached to the circumferential wall (102) and being configured to, when the valve body (100) is rotated, scrape over an inner surface of the housing (90).

2. The throttle valve (80) of claim 1, further comprising the housing (90) including a side wall (92) with an inner surface, an inlet (94), and an outlet (96) extending through the side wall (92).

3. The throttle valve (80) of claim 2, wherein the at least one scraping element (140, 150) is attached to the inner surface of the side wall (92) of the housing (90), such that the at least one scraping element (140, 150) is configured to scrape over an external surface of the circumferential wall (102) of the valve body (100).

4. The throttle valve (80) of any one of the preceding claims, further comprising:
a shaft (104) integrally formed with the circumferential wall (102) and configured to extend out of the housing (90); and
a bearing (98) configured to support the shaft (104) thereby enabling a rotational motion of the valve body (100) within the housing (90).

5. The throttle valve (80) of claim 4, further comprising a cover (110) configured to be mounted to the housing (90), thereby closing the housing (90) at an end opposite to the inlet (94), wherein the cover (110) is further configured to support the bearing (98).

6. The throttle valve (80) of any one of the preceding claims,
wherein
the outlet (96) comprises a first diameter, and
the opening (108) comprises a second diameter being approximately equal to the first diameter.

7. The throttle valve (80) of any one of the preceding claims, wherein the valve body (100) further includes at least one indent (130, 132) externally provided at the circumferential wall (102) and comprising a planar surface, wherein the at least one scraping element (140, 150) is configured to be externally attached to the circumferential wall (102) at the at least one indent (130, 132).

8. The throttle valve (80) of any one of the preceding claims, wherein two scraping elements (140, 150) are externally attached to the circumferential wall (102), such that deposits accumulated on the inner surface of the side wall (92) are removed, when the valve body (100) rotates in either a clockwise direction or a counter-clockwise direction.

9. The throttle valve (80) of any one of the preceding claims, wherein the side wall (92) of the housing (90) comprises a recessed portion (99) configured to accommodate the rotatable valve body (100).

10. The throttle valve (80) of any one of the preceding claims, wherein the at least one scraping element (140, 150) is made of stainless steel.

11. The throttle valve (80) of any one of the preceding claims, further comprising at least one sealing element (107) being circumferentially disposed between the circumferential wall (102) of the valve body (100) and the side wall (92) of the housing (90).

12. The throttle valve (80) of any one of the preceding claims, wherein the outlet (96) comprises an inner edge (97) being chamfered for preventing the at least one scraping element (140, 150) from being caught be the inner edge (97).

13. An internal combustion engine (10) comprising:
a turbine (42) configured to be driven by exhaust gas produced by the internal combustion engine (10);
a wastegate connection (82) configured to direct the exhaust gas around the turbine (42); and
a throttle valve (80) of any one of the preceding claims disposed within the wastegate connection (82).

14. A method for removing deposits accumulated within a throttle valve (80) of an internal combustion engine (10), the throttle valve (80) comprising a valve body (100) configured to be rotatably arranged within a housing (90), the method comprising the steps of:
rotating the valve body (100) within the housing (90); and
simultaneously scraping over an inner surface of the housing (90).

15. The method of claim 14, wherein scraping over the inner surface of the housing (90) is performed by at least one scraping element (140, 150).
